(19)

Europäisches
Patentamt
European
Patent Office
Office européen
des brevets

(11)  **EP 2 634 503 A1**

(12)  # EUROPEAN PATENT APPLICATION
published in accordance with Art. 153(4) EPC

(43)  Date of publication:
**04.09.2013 Bulletin 2013/36**

(21)  Application number: **11836249.0**

(22)  Date of filing: **25.10.2011**

(51)  Int Cl.:
**F24J 2/04** *(2006.01)*   **F03G 6/00** *(2006.01)*
**F24J 2/24** *(2006.01)*   **F24J 2/46** *(2006.01)*
**F24J 2/48** *(2006.01)*

(86)  International application number:
**PCT/JP2011/074520**

(87)  International publication number:
**WO 2012/057116 (03.05.2012 Gazette 2012/18)**

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30)  Priority: **25.10.2010 JP 2010239008**

(71)  Applicant: **Ibiden Co., Ltd.**
**Gifu 503-8604 (JP)**

(72)  Inventors:
• **MAJIMA Kazutaka**
 **Ibi-gun**
 **Gifu 501-0695 (JP)**
• **KATO Masataka**
 **Ibi-gun**
 **Gifu 501-0695 (JP)**

(74)  Representative: **HOFFMANN EITLE**
**Patent- und Rechtsanwälte**
**Arabellastrasse 4**
**81925 München (DE)**

(54)  **THERMAL RECEIVER AND SOLAR THERMAL POWER GENERATION DEVICE**

(57)  The thermal receiver of the invention is a thermal receiver used in a solar thermal power generation device, including a heat absorption body made of one or multiple honeycomb units having multiple flow paths arranged for circulation of a heat medium, and a support body which supports the heat absorption body and allows circulation of the heat medium, in which the heat absorption body is configured to include silicon carbide, and is supported a predetermined distance away from an inner surface of the support body.

FIG. 1A

**(Cont. next page)**

EP 2 634 503 A1

# FIG. 1B

A-A LINE CROSS-SECTIONAL VIEW

**Description**

Technical Field

The present invention relates to a thermal receiver and a solar thermal power generation device.

Background Art

As a power generation method using the sun, solar thermal power generation is known. In the solar thermal power generation, for example, light radiated from the sun is collected using reflecting mirrors or the like, and a vapor turbine is driven using obtained solar heat, thereby generating power. In the solar thermal power generation, since greenhouse effect gases, such as carbon dioxide, are not generated during power generation and heat can be stored, power generation is possible even under cloudy weather conditions or at night. Therefore, the solar thermal power generation has been paid attention as a future promising method of power generation.

The method of the solar thermal power generation can be roughly classified into two types, a trough type and a tower type.
The tower-type solar thermal power generation refers to a power generation method in which solar light is concentrated and collected at a thermal receiver present in a tower installed at the center portion using a number of plane mirrors called heliostats, and power is generated using the heat. In the case of the tower-type solar thermal power generation, since solar light collected using several hundred to several thousand of several square meter plane mirrors can be concentrated at one place, the thermal receiver can be heated to approximately 1000°C. Therefore, the tower-type solar thermal power generation has a favorable thermal efficiency.

As the thermal receiver for the tower-type solar thermal power generation, PTL 1 discloses a receiver in which a heat absorption body, which is made of silicon carbide, or silicon and silicon carbide, and has a number of gas flow paths for the circulation of a heat medium, is supported and fixed by a funnel-shaped support body.
In the thermal receiver, a heat medium made of air or a gas mixture including the air is circulated through the flow paths in the heated heat absorption body, whereby the heat medium can obtain heat. In the tower-type solar thermal power generation, water is boiled and vaporized using the obtained heat, and a vapor turbine is driven, thereby generating power.

Citation List

Patent Literature

[PTL 1] U.S. Patent No. 6003508

Summary of Invention

Technical Problem

In the thermal receiver described in PTL 1, since the heat absorption body is directly supported and fixed by the funnel-shaped support body, the heat absorption body is exposed to the surroundings. Accordingly, there is a problem in that heat collected with considerable efforts may be scattered to the surroundings.

The invention has been made to solve the above problem, and an object of the invention is to provide a thermal receiver and a solar thermal power generation device in which heat obtained by absorbing solar light radiated using heliostats is not easily diffused to the surroundings.

Solution to Problem

That is, according to a first aspect, there is provided a thermal receiver used in a solar thermal power generation device, including
a heat absorption body made of one or multiple honeycomb units having multiple flow paths arranged in parallel for circulation of a heat medium, and a support body which supports the heat absorption body and allows circulation of the heat medium, in which the heat absorption body is configured to include silicon carbide, and is supported a predetermined distance away from an inner surface of the support body.

In the thermal receiver according to the first aspect, since the heat absorption body is supported a predetermined distance away from the inner surface of the support body, it is possible to use a space between the heat absorption body and the support body as a heat insulating layer, and to effectively prevent heat from scattering from the heat absorption body to the support body.

In the thermal receiver according to the first aspect, since the heat absorption body is configured to include silicon carbide, thermal conductivity is high. In addition, since the heat absorption body is excellent in terms of thermal resistance, cracking and the like do not occur easily, and obtained heat can be smoothly transferred to the heat medium. In addition, since silicon carbide is stable even at 1600°C in the atmosphere, performances of the heat absorption body are hard to change even in long-term use.

In a thermal receiver according to a second aspect, a holding material is interposed between the heat absorption body and the support body, and the holding material functions as the heat insulating layer. Therefore, it is possible to effectively prevent heat from scattering from the heat absorption body to the support body, to firmly hold the heat absorption body using the holding material, and to stably use the heat absorption body for a long period of time.

In a thermal receiver according to a third aspect, the heat absorption body is firmly supported and fixed by fixing members provided in the support body. In addition, since an air layer is present between the heat absorption body and the support body excluding the fixing members, the air layer functions as the heat insulating layer, and it is possible to effectively prevent heat from scattering from the heat absorption body to the support body.

In a thermal receiver according to a fourth aspect, an inorganic heat insulating member is interposed between the heat absorption body and the support body, and the inorganic heat insulating member functions as the heat insulating layer. Therefore, it is possible to effectively prevent heat from scattering from the heat absorption body to the support body, to firmly hold the heat absorption body using the inorganic heat insulating member, and to stably use the heat absorption body for a long period of time.

In a thermal receiver according to a fifth aspect, the holding material is made of an alumina-silica fiber, an alumina fiber or a silica fiber, the holding material has an excellent heat insulating property and thermal resistance. Therefore, the holding material is not fused even when the temperature of the heat absorption body increases to approximately 1000°C. Therefore, the thermal receiver can hold the heat insulating property, firmly hold the heat absorption body, and be stably used for a long period of time.

In a thermal receiver according to a sixth aspect, the thermal receiver is made of an alumina-silica fiber in which a composition ratio between alumina and silica (alumina/silica) is 60/40 to 80/20. Therefore, the holding material has an excellent heat insulating property and thermal resistance so that the holding material may hold the heat insulating property, and firmly hold the heat absorption body without being fused even when the temperature of the heat absorption body increases to approximately 1000°C.

In a thermal receiver according to a seventh aspect, when a cross-sectional area of a surface parallel to a surface of the heat absorption body, to which solar light is radiated, is indicated by A, and an opening area of the support body including the surface parallel to the surface to which solar light is radiated is indicated by B, an area proportion of a heat insulating region, which is represented by the following formula (1), is 5% to 50%,

$$\texttt{Area proportion of the heat insulating region (\%) =}$$

$$\texttt{(B - A)} \times \texttt{100 / B} \qquad \cdots \qquad \texttt{(1)}$$

Therefore, a layer having the above proportion functions as the heat insulating layer, and thermal diffusion from the heat absorption body can be prevented.

When the area proportion of the heat insulating region is less than 5%, since the proportion of the heat insulating region is too small, it is not possible to sufficiently prevent thermal diffusion, and, when the area proportion of the heat insulating region exceeds 50%, the heat insulating effect barely improves even when the heat insulating region is further increased.

In a thermal receiver according to an eighth aspect, since the heat absorption body is made of porous silicon carbide, the thermal conductivity is high, and the obtained heat can be smoothly transferred to the heat medium.

In a thermal receiver according to a ninth aspect, since the heat absorption body includes porous silicon carbide and silicon that fills up the pores in the porous silicon carbide, the heat absorption body becomes a dense body. When the heat absorption body is a dense body, the heat storing property of the heat absorption body increases. In addition, since the thermal conductivity of the heat absorption body, which is a dense body, is high, the obtained heat can be smoothly transferred to the heat medium.

In a thermal receiver according to a tenth aspect, since porosity of the porous silicon carbide is 35% to 60%, an average pore diameter is 5 $\mu$m to 30 $\mu$m, and the thermal receiver has open pores, silicon smoothly fills up the inside of the pores when filling the silicon.

In a thermal receiver according to an eleventh aspect, since the heat absorption body is made of dense silica carbide, the heat storing property of the heat absorption body increases. In addition, since the heat absorption body made of dense silicon carbide has an extremely high thermal conductivity, the obtained heat can be smoothly transferred to the heat medium.

In a thermal receiver according to a twelfth aspect, flow paths are formed in the heat absorption body at 31.0

paths/cm$^2$ to 93.0 paths/cm$^2$, and a thickness of a wall portion between the flow paths in the heat absorption body is 0.1 mm to 0.5 mm. Therefore, the flow paths in the heat absorption body facilitates the circulation of the heat medium, whereby heat is efficiently transferred to the heat medium from the heat absorption body, and, consequently, it is possible to generate power at a high efficiency.

In a thermal receiver according to a thirteenth aspect, the thermal receiver according to any one of the first to twelfth aspects is used, and the thermal conductivity of the heat absorption body is favorable. Furthermore, since the thermal receiver has the heat insulating layer and does not allow the scattering of heat, it is possible to efficiently convert radiated solar light into heat, and to efficiently generate power.

Brief Description of Drawings

Fig. 1A is a vertical cross-sectional view schematically illustrating a thermal receiver according to a first embodiment of the invention, and Fig. 1B is a cross-sectional view of the thermal receiver cut along the line A-A illustrated in Fig. 1A.

Fig. 2 is a cross-sectional view schematically illustrating cross-sectional area A and cross-sectional area B used for computing an area proportion of a heat insulating region.

Fig. 3A is a vertical cross-sectional view schematically illustrating a thermal receiver according to a second embodiment of the invention, and Fig. 3B is a cross-sectional view of the thermal receiver cut along the line B-B illustrated in Fig. 3A.

Fig. 4A is a vertical cross-sectional view schematically illustrating a thermal receiver according to a third embodiment of the invention, and Fig. 4B is a cross-sectional view of the thermal receiver cut along the line C-C illustrated in Fig. 4A.

Fig. 5A is a front view schematically illustrating a receiver array that configures a solar thermal power generation device according to a fourth embodiment of the invention, and Fig. 5B is a cross-sectional view of the receiver array cut along the line C-C illustrated in Fig. 5A.

Fig. 6 is an explanatory view schematically illustrating the solar thermal power generation device according to the fourth embodiment of the invention.

Fig. 7 illustrates graphs of the temperature changes of samples in Examples 1 to 3 and Comparative example 1 of the invention.

Fig. 8 is a graph illustrating the relationship between the area proportions of the heat insulating regions and the peak temperatures of the samples in Examples 1 to 3 and Comparative example 1 of the invention.

Fig. 9 illustrates graphs of the temperature changes of samples in Examples 4 to 6 and Comparative example 2 of the invention.

Fig. 10 is a graph illustrating the relationship between the area proportions of the heat insulating regions and the peak temperatures of the samples in Examples 4 to 6 and Comparative example 2 of the invention.

Fig. 11 illustrates graphs of the temperature changes of samples in Examples 7 to 9 and Comparative example 3 of the invention.

Fig. 12 is a graph illustrating the relationship between the area proportions of the heat insulating regions and the peak temperatures of the samples in Examples 7 to 9 and Comparative example 3 of the invention.

Description of Embodiments

(First embodiment)

Hereinafter, a first embodiment, which is an embodiment of the thermal receiver of the invention, will be described with reference to the accompanying drawings.

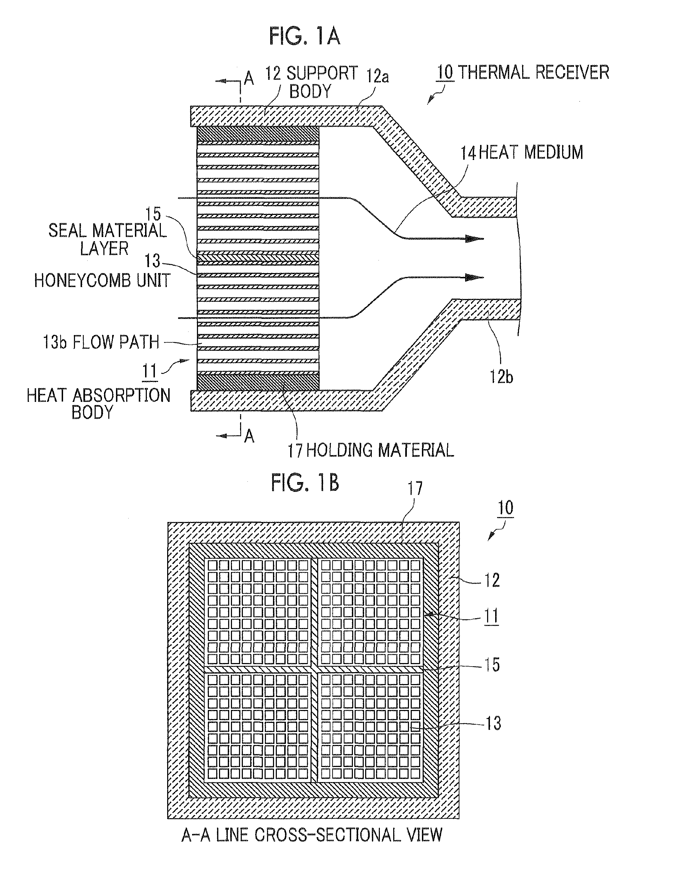

Fig. 1A is a vertical cross-sectional view schematically illustrating a thermal receiver according to the first embodiment of the invention, and Fig. 1B is a cross-sectional view of the thermal receiver cut along the line A-A illustrated in Fig. 1A. Fig. 1A is a vertical cross-sectional view cut in parallel with flow paths in honeycomb units that configure a heat absorption body accommodated in the thermal receiver, and Fig. 1B is a cross-section perpendicular to the flow paths.

As illustrated in Figs. 1A and 1B, a thermal receiver 10 according to the present embodiment of the invention is configured to include a heat absorption body 11, to which multiple honeycomb units 13 having multiple flow paths 13b arranged in parallel for the circulation of a heat medium 14 are adhered through a seal material layer 15 that functions as an adhesive, and a support body 12 which accommodates and supports the heat absorption body 11 and allows the circulation of the heat medium 14. In addition, a holding material 17 made of an inorganic fiber is interposed between the heat absorption body 11 and the support body 12, and the heat absorption body 11 is supported and fixed by the support body 12 through the holding material 17. The heat absorption body 11 is made of one honeycomb unit 13.

The honeycomb unit 13 is made of porous silicon carbide having open pores.

In the thermal receiver 10 according to the embodiment of the invention, the porosity of the porous silicon carbide is desirably 35% to 60%. When the porosity of the porous silicon carbide is less than 35%, since some pores are liable to become closed pores, and it becomes difficult for the heat medium to intrude into the pores, the thermal conductivity becomes liable to degrade. On the other hand, when the porosity of the porous silicon carbide exceeds 60%, the strength of the honeycomb unit 13 decreases, and the honeycomb unit becomes liable to be broken due to the repetition of the increase and decrease in the temperature of the honeycomb unit 13 (thermal history).

Meanwhile, the porosity is a value measured using a mercury intrusion method.

The average pore diameter of the porous silicon carbide is desirably 5 $\mu$m to 30 $\mu$m. When the average pore diameter of the porous silicon carbide is less than 5 $\mu$m, the pores in the porous silicon carbide are liable to become closed pores, and it becomes difficult for the heat medium to intrude into the pores. Therefore, the thermal conductivity of the honeycomb unit 13 becomes liable to decrease. On the other hand, when the average pore diameter of the porous silicon carbide exceeds 30 $\mu$m, the mechanical strength of the porous silicon carbide decreases, and, consequently, the strength of the honeycomb unit 13 also decreases.

In the honeycomb unit 13 according to the embodiment of the invention, when a cross-section perpendicular to the flow paths 13b is formed, the number of the flow paths 13b per square centimeter is desirably 31.0 paths/cm$^2$ to 93.0 paths/cm$^2$. In a case in which the number of the flow paths 13b in the honeycomb unit 13 is less than 31.0 paths/cm$^2$, since the number of the flow paths 13b in the honeycomb unit 13 is small, it becomes difficult for the honeycomb unit 13 to efficiently exchange heat with the heat medium. On the other hand, when the number of the flow paths 13b in the honeycomb unit 13 exceeds 93.0 paths/cm$^2$, since the cross-sectional area of a flow path 13b in the honeycomb unit 13 becomes small, it becomes difficult for the heat medium to circulate.

In addition, the thickness of a wall portion between the flow paths in the honeycomb unit 13 is preferably 0.1 mm to 0.5 mm. When the thickness of the wall portion in the honeycomb unit 13 is less than 0.1 mm, the mechanical strength of the wall portion in the honeycomb unit 13 decreases, and the honeycomb unit becomes liable to be broken. On the other hand, when the thickness of the wall portion in the honeycomb unit 13 exceeds 0.5 mm, since the wall portion in the honeycomb unit 13 becomes too thick, and the circulation amount of the heat medium 14 decreases with respect to the area of the honeycomb unit 13, the thermal efficiency degrades.

In the honeycomb unit 13 according to the embodiment of the invention, the porous silicon carbide is used, but a different porous ceramic can be also used. Examples of the other porous ceramics include nitride ceramics, such as aluminum nitride, silicon nitride and boron nitride; and carbide ceramics, such as silicon carbide, zirconium carbide and tantalum carbide. The above ceramics have a characteristic of having a high thermal conductivity.

Meanwhile, in Fig. 1B, the cross-sectional shape of the flow path 13b in the honeycomb unit 13 is rectangular, but the cross-sectional shape of the flow path 13b is not particularly limited, and may be hexagonal or the like. In addition, the cross-sectional figure of the support body 12 illustrated in Fig. 1B is rectangular, but is not particularly limited to be rectangular, and may be hexagonal or the like.

In the embodiment, the heat absorption body 11 is manufactured using multiple honeycomb units 13, and the honeycomb units 13 are adhered to each other using adhesive paste including at least one of inorganic particles, an inorganic fiber and an inorganic binder as an adhesive. Therefore, the honeycomb units form the heat absorption body 11 which is made up of multiple honeycomb units 13 and adhesive layers. The adhesive paste may include an organic binder.

Examples of the inorganic binder included in the adhesive paste include a silica sol, an alumina sol and the like. The inorganic binder may be used solely or in combination of two or more kinds. Among the inorganic binders, a silica sol is desirable.

In addition, the lower limit of the content of the inorganic binder is desirably 1 weight%, and more desirably 5 weight% in terms of solid content. On the other hand, the upper limit of the content of the inorganic binder is desirably 30 weight%, and more desirably 15 weight% in terms of solid content. When the content of the inorganic binder is less than 1 weight% in terms of solid content, the adhesion strength is liable to decrease. On the other hand, when the content of the inorganic binder exceeds 30 weight% in terms of solid content, the thermal conductivity of the adhesive layer is liable to decrease.

Examples of the organic binder included in the adhesive paste include polyvinyl alcohols, methyl cellulose, ethyl cellulose, carboxymethyl cellulose and the like. The organic binder may be used solely or in combination of two or more kinds. Among the organic binders, carboxymethyl cellulose is desirable.

The lower limit of the content of the organic binder is desirably 0.1 weight%, and more desirably 0.4 weight% in terms of solid content. On the other hand, the upper limit of the content of the organic binder is desirably 5.0 weight%, and more desirably 1.0 weight% in terms of solid content. When the content of the organic binder is less than 0.1 weight% in terms of solid content, the adhesive layer becomes liable to migrate. On the other hand, when the content of the organic binder exceeds 5.0 weight% in terms of solid content, the adhesive force between the adhesive layer and the honeycomb unit is liable to decrease.

Examples of the inorganic fiber included in the adhesive paste include ceramic fibers, such as silica-alumina, mullite, alumina, and silica; and the like. The inorganic fiber may be used solely or in combination of two or more kinds. Among the inorganic fibers, an alumina fiber is desirable.

The lower limit of the content of the inorganic fiber is desirably 10 weight%, and more desirably 20 weight%. On the other hand, the upper limit of the content of the inorganic fiber is desirably 70 weight%, and more desirably 40 weight%. When the content of the inorganic fiber is less than 10 weight%, the elasticity of the adhesive layer becomes liable to decrease. On the other hand, when the content of the inorganic fiber exceeds 70 weight%, the thermal conductivity of the adhesive layer is liable to decrease, and the effect as the elastic body becomes liable to degrade.

Examples of the inorganic particles included in the adhesive paste include carbides, nitrides and the like. Specific examples include inorganic powder made of silicon carbide, silicon nitride or boron nitride, and the like. The inorganic particles may be used solely or in combination of two or more kinds. Among the inorganic particles, silicon carbide having excellent thermal conductivity is desirable.

The lower limit of the content of the inorganic particles is desirably 3 weight%, more desirably 10 weight%, and still more desirably 20 weight%. On the other hand, the upper limit of the content of the inorganic particles is desirably 80 weight%, and more desirably 40 weight%. When the content of the inorganic particles is less than 3 weight%, the thermal conductivity of the adhesive layer becomes liable to decrease. On the other hand, when the content of the inorganic particles exceeds 80 weight%, the adhesion strength is liable to decrease in a case in which the adhesive layer is exposed to a high temperature.

The organic binder included in the adhesive layer is decomposed and eliminated when the temperature of the honeycomb unit 13 increases; however, since the inorganic particles and the like are included in the adhesive layer, it is possible to maintain a sufficient adhesive force.

In the embodiment, the adhesive layer desirably includes the inorganic particles, the inorganic fiber and the inorganic binder (the solid content of the inorganic binder). Furthermore, the adhesive layer is more desirably formed using adhesive paste including the inorganic particles, the inorganic fiber, the organic binder and the inorganic binder.

The support body 12 has a rectangular front cross-sectional shape as illustrated in Fig. 1B, but has an overall shape of a funnel shape. That is, the cross-section of an enlarged portion 12a, in which the heat absorption body 11 is accommodated and into which the heat medium 14 flows (the cross-section in parallel to the surface of the heat absorption body 11 which receives solar light), has a large area; however, as the cross section is shifted in an exit direction of the heat medium 14, the area of the cross-section gradually decreases, and the cross-sectional area becomes a substantially constant area at an exit 12b for the heat medium.

The material of the support body 12 is not particularly limited; however, since the heat absorption body 11 reaches approximately 1000°C, the material of the support body 12 needs to have thermal resistance, and therefore a metal or a ceramic is preferable.

Examples of the metal material include iron, nickel, chromium, aluminum, tungsten, molybdenum, titanium, lead, copper, zinc, alloys thereof, and the like. In addition, examples of the ceramic include carbide ceramics, such as aluminum nitride, silicon nitride, boron nitride and titanium nitride; oxide ceramics, such as silica, alumina, mullite and zirconia; and the like. Examples of additional materials of the support body 12 include complexes of a metal and a nitride ceramic, complexes of a metal and a carbide ceramic, and the like. The material of the support body is preferably a ceramic, such as alumina or silicon carbide, in terms of thermal resistance.

In the thermal receiver 10 according to the embodiment of the invention, the holding material 17 is interposed between the heat absorption body 11 and the support body 12.

The holding material 17 is configured of a mat, which is made of an inorganic fiber and has a rectangular shape in the planar view, or by laminating multiple mats. When the holding material 17 is accommodated in the support body 12 in a state in which the holding material 17 is wound around the side surfaces of the heat absorption body 11, it is possible to support and fix the heat absorption body 11 in the support body 12. Therefore, it is possible to prevent the heat stored in the heat absorption body 11 from diffusing.

Regarding the proportion of the cross-sectional area of the heat insulating region, which is made of the holding material 17, in the cross-sectional opening area of the support body 12 (hereinafter also referred to as "area proportion of the heat insulating region"), when the cross-sectional area of a surface parallel to the surface of the heat absorption body 11, to which solar light is radiated, is indicated by A, and the opening area of the support body 12 including the surface parallel to the surface to which solar light is radiated is indicated by B, the area proportion of the heat insulating region, which is represented by the following formula (1), is desirably 5% to 50%,

$$\text{Area proportion of the heat insulating region (\%) =}$$

$$(B - A) \times 100 \, / \, B \qquad \cdots \qquad (1)$$

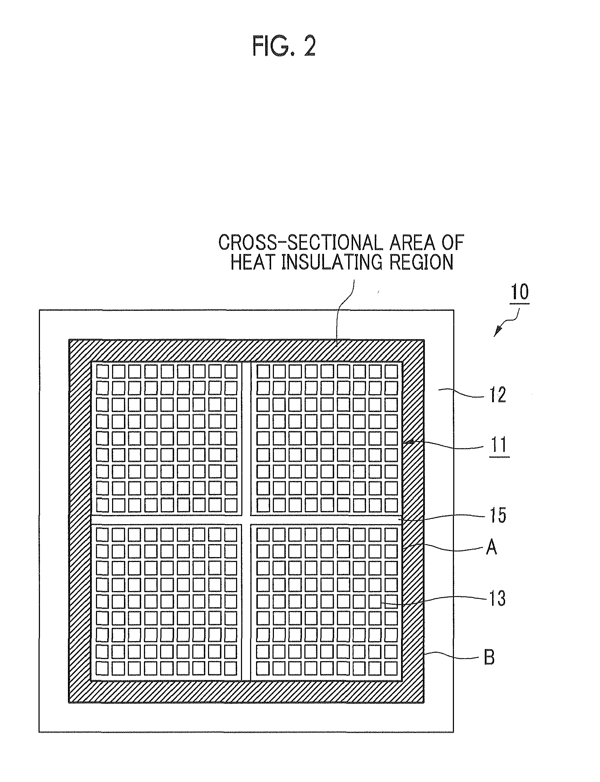

Fig. 2 is a cross-sectional view schematically illustrating the cross-sectional area A and the cross-sectional area B, which are used for computing the area proportion of the heat insulating region.

In Fig. 2, the cross-sectional view illustrated in Fig. 1B is used, the outermost outline illustrated in the drawing is the outside outline of the support body 12, and the inside portion of the outline B inside the outermost outline indicates the opening area B of the support body 12. In addition, the outline A inside the opening area indicates the cross-sectional area A of the heat absorption body 11. Therefore, the hatching portion illustrates the cross-sectional area of the heat insulating region (B-A), the area proportion of the heat insulating region becomes the percentage of the cross-sectional area of the heat insulating region (B-A) with respect to the opening area B of the support body 12, and forms the formula (1).

When the area proportion of the heat insulating region is less than 5%, since the proportion of the heat insulating region of the holding material is too small, it is not possible to sufficiently prevent the diffusion of the heat medium. On the other hand, when the area proportion of the heat insulating region exceeds 50%, the heat insulating effect barely improves even when the area proportion is further increased.

It is considered that the above desirable range of the area proportion of the heat insulating region can be similarly applied to a case in which a different material is used as the heat insulating material or a case in which the heat insulating area is made up of an air layer and fixing members in addition to a case in which the holding material 17 is used as the heat insulating material. Meanwhile, the heat absorption body 11 is desirably disposed so that the intervals between the heat absorption body 11 and the support body 12, which are present above and below the heat absorption body 11 and on the right and left sides of the heat absorption body, become the same.

The inorganic fiber that configures the holding material 17 is not particularly limited, and may be an alumina-silica fiber. Examples thereof include an alumina fiber, a silica fiber, Rockwell, and the like. The inorganic fiber may be changed depending on the characteristics and the like required for the holding material, such as thermal resistance or wind erosion resistance. In a case in which an alumina-silica fiber is used as the inorganic fiber, an alumina-silica fiber having a composition ratio between alumina and silica of, for example, 60:40 to 80:20 is desirably used.

A needle punching treatment is desirably carried out on the holding material 17. When a needle punching treatment is carried out on the holding material, the constituent material, such as the inorganic fiber, of the mat that configures the holding material is not easily separated, and can be made into a single well-organized mat shape. In addition, when a needle punching treatment is carried out on the holding material in the width direction, which is perpendicular to the longitudinal direction, fold lines are generated in the width direction of the mat that configures the holding material at portions on which the needle punching treatment has been carried out. Therefore, it becomes easy to wind the holding material when the holding material is wound around the heat absorption body.

In addition, as the holding material 17, a material obtained by impregnating an organic binder including an acryl-based resin and the like in the mat that configures the holding material, and compressively drying the mat so as to have a thin thickness may be used. When the reflected light of solar light is radiated on the heat absorption body 11 after the holding material 17 is wound around the heat absorption body 11, and pushed into the support body 12 so as to fit the heat absorption body 11 into the support body 12, the temperature of the heat absorption body 11 increases to approximately 1000°C. Therefore, the organic binder is decomposed and eliminated, and the compression state formed by the organic binder in the mat which configures the holding material 17 is released so that it becomes easy for the heat absorption body 11 to be firmly supported and fixed by the support body 12.

Hereinafter, a method for manufacturing the thermal receiver according to the embodiment will be described. First, the porous silicon carbide that configures the honeycomb unit is manufactured.

When manufacturing the porous silicon carbide, silicon carbide powder having different average particle diameters, which is a raw material, an organic binder, a plasticizer, a lubricant, water and the like are mixed, thereby preparing a wet mixture.

Subsequently, a molding process, in which the wet mixture is injected into an extrusion molding machine, and is extrusion-molded, is carried out, thereby manufacturing a quadratic prismatic compact of the honeycomb unit having multiple flow paths formed in the longitudinal direction.

Next, a cutting process, in which both ends of the compact of the honeycomb unit are cut using a cutting apparatus, is carried out so as to cut the compact of the honeycomb unit into a predetermined length, and the cut compact of the honeycomb unit is dried using a drying machine.

Next, a defatting process, in which the organic substances in the compact of the honeycomb unit are heated in a defatting furnace, is carried out, the compact is transported to a firing furnace, and a firing process is carried out, thereby manufacturing the honeycomb unit (porous silicon carbide).

When multiple honeycomb units are adhered to each other, the adhesive paste is coated on the side surfaces (surfaces on which the flow paths are not formed) of the honeycomb units, the honeycomb units are adhered to each other, and then dried, thereby forming the adhesive layer. When solar thermal power generation is carried out, since the heat absorption body 11 is irradiated with solar light so as to reach a temperature of approximately 1000°C, moisture and the like in the adhesive layer are vaporized, and the organic binder is decomposed and eliminated. However, the inorganic fiber and the inorganic particles are joined using the solid content of the inorganic binder included in the adhesive layer, which forms a strong adhesive layer.

The support body can be manufactured using a method which has been thus far used. When manufacturing the support body made of a ceramic, the support body can be manufactured by carrying out the defatting process and the firing process after the pressing, injection molding, casting and the like of a mixture including ceramic powder, the organic binder and the like.

When assembling the thermal receiver 10, the holding material 17 is wound around the heat absorption body 11 manufactured using the above method, and pushed into the support body 12 so as to be fixed, thereby assembling the thermal receiver 10.

Hereinafter, the actions and effects of the thermal receiver of the embodiment will be listed.

(1) Since the thermal receiver of the embodiment has the heat absorption body including the honeycomb units made of porous silicon carbide, the thermal conductivity is high, and the obtained heat can be smoothly transferred to the heat medium, such as air. In addition, since silicon carbide that configures the honeycomb unit is stable in the air even at 1600°C, the performances are not easily changed even in long-term use.

(2) In the thermal receiver of the embodiment, the holding material is interposed between the heat absorption body and the support body, and the heat absorption body can be firmly held using the holding material. In addition, since the holding material functions as the heat insulating layer, it is possible to effectively prevent heat from scattering from the heat absorption body to the support body.

(3) In the thermal receiver of the embodiment, the heat absorption body is configured of multiple honeycomb units adhered through the adhesive layer formed on the side surfaces, for which the adhesive paste is used. Therefore, the honeycomb units are firmly adhered to each other. In addition, since the adhesive layer has thermal resistance, it is possible to reliably prevent some of the honeycomb units from dropping, which may be caused by a force exerting in the flowing direction of the heat medium which flows through the flow paths for the heat medium.

(4) In the thermal receiver of the embodiment, in the heat absorption body made up of the honeycomb units, the flow paths are formed at 31.0 paths/cm$^2$ to 93.0 paths/cm$^2$, the thickness of the wall portion between the flow paths in the honeycomb unit is 0.1 mm to 0.5 mm, the porosity of the porous silicon carbide is 35% to 60%, and the average pore diameter is 5 $\mu$m to 30 $\mu$m. Therefore, it becomes easy for the silicon to fill up the pores in the porous silicon carbide. The heat medium flows through the flow paths in the honeycomb unit, and therefore heat is efficiently transferred from the dense heat absorption body to the heat medium. As a result, in the solar thermal power generation device, in which the thermal receiver is used, power can be generated at a high efficiency.

Examples

Hereinafter, examples, in which the first embodiment of the invention is disclosed more specifically, will be described, but the invention is not limited to the examples.

(Example 1)

(Process for manufacturing a fired compact of the honeycomb unit)

Coarse powder of silicon carbide having an average particle diameter of 22 $\mu$m (52.8 weight%) and fine powder of silicon carbide having an average particle diameter of 0.5 $\mu$m (22.6 weight%) were mixed, an acryl resin (2.1 weight%), an organic binder (methyl cellulose, 4.6 weight%), a lubricant (UNIROOF manufactured by NOF Corporation, 2.8 weight%), glycerin (1.3 weight%) and water (13.8 weight%) were added to the obtained mixture, and the components were kneaded, thereby obtaining a wet mixture. An extrusion molding process, in which the obtained wet mixture was extrusion-molded, was carried out, thereby manufacturing a quadratic prismatic compact of the honeycomb unit.

Next, the raw compact of the honeycomb unit was dried using a microwave drying machine, thereby producing a dried compact of the honeycomb unit.

A defatting process, in which the dried compact of the honeycomb unit was defatted at 400°C, was carried out, a firing process was carried out under conditions of an argon atmosphere, a normal pressure, 2200°C and 3 hours, thereby manufacturing a honeycomb unit 13 made of silicon carbide. The porosity of the obtained honeycomb unit 13 was 42%, the average pore diameter was 11 $\mu$m, the size was 34.3 mm x 34.3 mm x 45 mm, the number of cells (cell density) was 50 cells/cm$^2$, and the thickness of the cell wall was 0.25 mm (10 mil).

(Adhering process)

Next, a thermal resistant double-sided tape was adhered to the adhesion surface of the obtained honeycomb unit 13 made of porous silicon carbide, and a total of 16 (4 x 4) honeycomb units 13 were adhered to each other through the thermal resistant double-sided tape, thereby producing the heat absorption body 11.

Next, the holding material 17, which was a sheet-like inorganic fiber made of $Al_2O_3$ and $SiO_2$ at a composition ratio of 72:28 (weight ratio), and had an average fiber diameter of the inorganic fiber of 5.1 $\mu$m (average fiber length 60 mm), a bulk density of 0.15 $g/cm^3$ and a fiber density of 1400 $g/m^2$, was wound around the obtained heat absorption body 11 so that the thickness became 21 mm, thereby producing a sample for temperature measurement.

A thermal receiver can be produced by inserting and fixing the sample for temperature measurement in the support body 12.

At this time, the dimensions of the heat absorption body 11 become 137.2 mm in height and 137.2 mm in width. In the present example, since the 21 mm-thick holding material 17 is wound around the heat absorption body 11, when the area proportion of the heat insulating region is computed with an assumption that the support body 12 is disposed around the holding material 17, the following is obtained.

$$[\text{Cross-sectional area B (179.2} \times \text{179.2)} - \text{cross-sectional area A (137.2} \times \text{137.2)}] \times 100\ /\ \text{cross-sectional area B (179.2} \times \text{179.2)} = 41.4(\%)$$

That is, the area proportion of the heat insulating region becomes 41.4%.

(Example 2)

A sample for temperature measurement was produced in the same manner as in Example 1 except that the thickness of the holding material 17 was set to 14 mm. When the area proportion of the heat insulating region is computed in the same manner as in Example 1 for the sample, the following is obtained.

$$[\text{Cross-sectional area B (165.2} \times \text{165.2)} - \text{cross-sectional area A (137.2} \times \text{137.2)}] \times 100\ /\ \text{cross-sectional area B (165.2} \times \text{165.2)} = 31.0(\%)$$

That is, the area proportion of the heat insulating region becomes 31.0%.

(Example 3)

A sample for temperature measurement was produced in the same manner as in Example 1 except that the thickness of the holding material 17 was set to 7 mm. When the area proportion of the heat insulating region is computed in the same manner as in Example 1 for the sample, the following is obtained.

$$[\text{Cross-sectional area B (151.2} \times \text{151.2)} - \text{cross-sectional area A (137.2} \times \text{137.2)}] \times 100\ /\ \text{cross-sectional area B (151.2} \times \text{151.2)} = 17.7(\%)$$

That is, the area proportion of the heat insulating region becomes 17.7%.

(Example 4)

The honeycomb unit 13 was manufactured in the same manner as in Example 1, and a total of 9 (3x3) honeycomb units 13 were adhered using a thermal resistant double-sided tape, thereby producing the heat absorption body 11.

Next, the same holding material 17 as the holding material 17 used in Example 1 was wound around the obtained heat absorption body 11 so that the thickness became 21 mm, thereby producing a sample for temperature measurement. At this time, the dimensions of the heat absorption body 11 become 102.9 mm in height and 102.9 mm in width. In the present example, since the 21 mm-thick holding material 17 is wound around the heat absorption body 11, when the area proportion of the heat insulating region is computed with an assumption that the support body 12 is disposed around the holding material 17, the following is obtained.

```
[Cross-sectional area B (144.9 × 144.9) - cross-
sectional area A (102.9 × 102.9)] × 100 / cross-sectional
area B (144.9 × 144.9) = 49.6(%)
```

That is, the area proportion of the heat insulating region becomes 49.6%.

(Example 5)

A sample for temperature measurement was produced in the same manner as in Example 4 except that the thickness of the holding material 17 was set to 14 mm. When the area proportion of the heat insulating region is computed in the same manner as in Example 4 for the sample, the following is obtained.

```
[Cross-sectional area B (130.9 × 130.9) - cross-
sectional area A (102.9 × 102.9)] × 100 / cross-sectional
area B (130.9 × 130.9) = 38.2(%)
```

That is, the area proportion of the heat insulating region becomes 38.2%.

(Example 6)

A sample for temperature measurement was produced in the same manner as in Example 4 except that the thickness of the holding material 17 was set to 7 mm. When the area proportion of the heat insulating region is computed in the same manner as in Example 4 for the sample, the following is obtained.

```
[Cross-sectional area B (116.9 × 116.9) - cross-
sectional area A (102.9 × 102.9)] × 100 / cross-sectional
area B (116.9 × 116.9) = 22.5(%)
```

That is, the area proportion of the heat insulating region becomes 22.5%.

(Example 7)

The honeycomb unit 13 was manufactured in the same manner as in Example 1, and a total of 4 (2x2) honeycomb units 13 were adhered using a thermal resistant double-sided tape, thereby producing the heat absorption body 11.
Next, the same holding material 17 as the holding material 17 used in Example 1 was wound around the obtained heat absorption body 11 so that the thickness became 21 mm, thereby producing a sample for temperature measurement. At this time, the dimensions of the heat absorption body 11 become 68.6 mm in height and 68.6 mm in width. In the present example, since the 21 mm-thick holding material 17 is wound around the heat absorption body 11, when the area proportion of the heat insulating region is computed with an assumption that the support body 12 is disposed around the holding material 17, the following is obtained.

$$[\text{Cross-sectional area B } (110.6 \times 110.6) - \text{cross-sectional area A } (68.6 \times 68.6)] \times 100 \, / \, \text{cross-sectional area B } (110.6 \times 110.6) = 61.5(\%)$$

That is, the area proportion of the heat insulating region becomes 61.5%.

(Example 8)

A sample for temperature measurement was produced in the same manner as in Example 7 except that the thickness of the holding material 17 was set to 14 mm. When the area proportion of the heat insulating region is computed in the same manner as in Example 7 for the sample, the following is obtained.

$$[\text{Cross-sectional area B } (96.9 \times 96.9) - \text{cross-sectional area A } (68.6 \times 68.6) \times 100 \, / \, \text{cross-sectional area B } (96.9 \times 96.9) = 49.6(\%)$$

That is, the area proportion of the heat insulating region becomes 49.6%.

(Example 9)

A sample for temperature measurement was produced in the same manner as in Example 7 except that the thickness of the holding material 17 was set to 7 mm. When the area proportion of the heat insulating region is computed in the same manner as in Example 7 for the sample, the following is obtained.

$$[\text{Cross-sectional area B } (82.6 \times 82.6) - \text{cross-sectional area A } (68.6 \times 68.6) \times 100 \, / \, \text{cross-sectional area B } (82.6 \times 82.6) = 31.0(\%)$$

That is, the area proportion of the heat insulating region becomes 31.0%.

(Comparative example 1)

A sample for temperature measurement was manufactured in the same manner as in Example 1 except that the holding material 17 was not wound around the heat absorption body 11. The area proportion of the heat insulating region of the present comparative examples is 0%.

(Comparative example 2)

A sample for temperature measurement was manufactured in the same manner as in Example 4 except that the holding material 17 was not wound around the heat absorption body 11. The area proportion of the heat insulating region of the present comparative examples is 0%.

(Comparative example 3)

A sample for temperature measurement was manufactured in the same manner as in Example 7 except that the holding material 17 was not wound around the heat absorption body 11. The area proportion of the heat insulating region of the present comparative examples is 0%.

(Evaluation of the samples)

The samples for temperature measurement of Examples 1 to 9 and Comparative examples 1 to 3 (hereinafter also referred to simply as samples) were irradiated for 30 minutes using a spot photographing lamp RPS-500WB (100 V, 150 W) manufactured by Panasonic Corporation at a distance of 100 mm from the surfaces of the samples. The temperatures of the samples were measured using a thermocouple directly fitted in the sample every 10 seconds from the beginning of the irradiation to 30 minutes after the end of the irradiation.

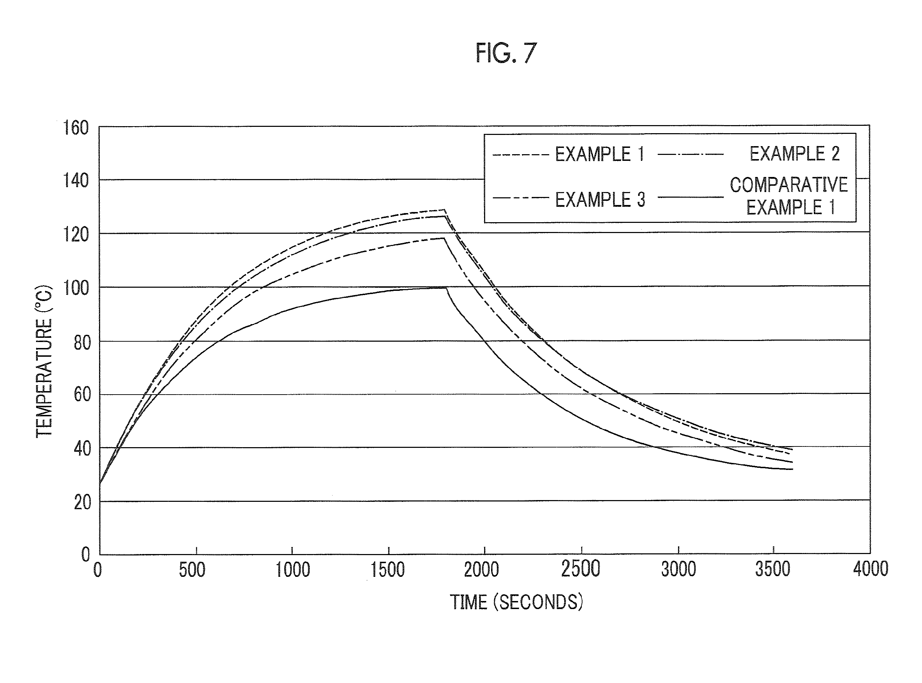

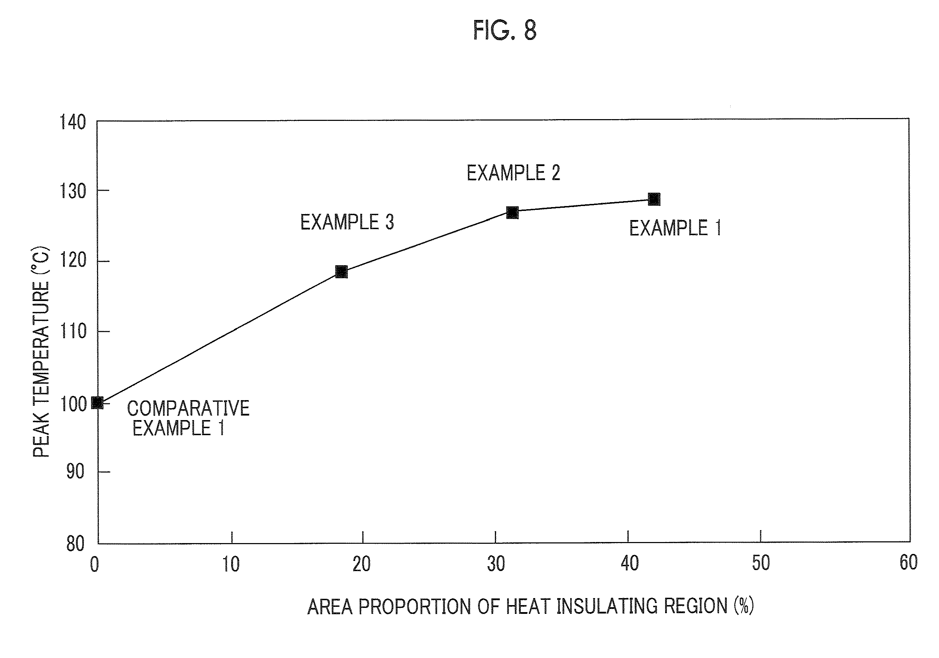

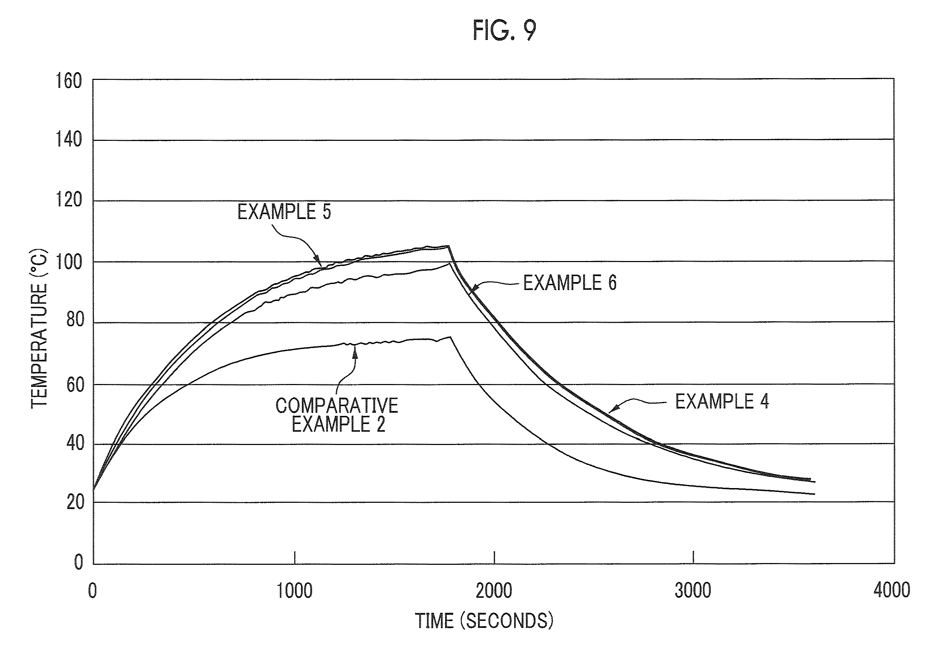

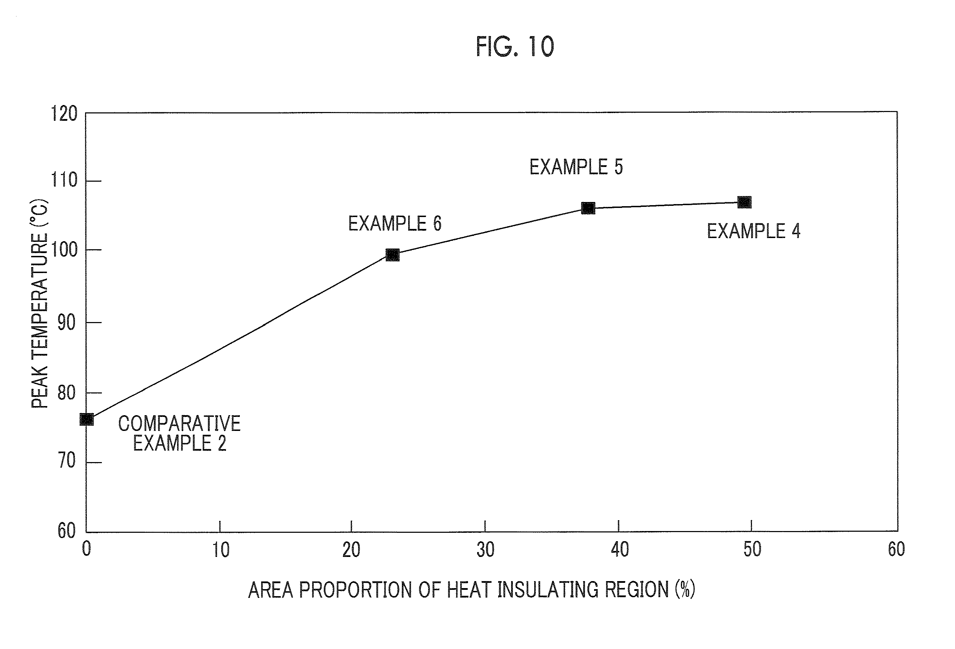

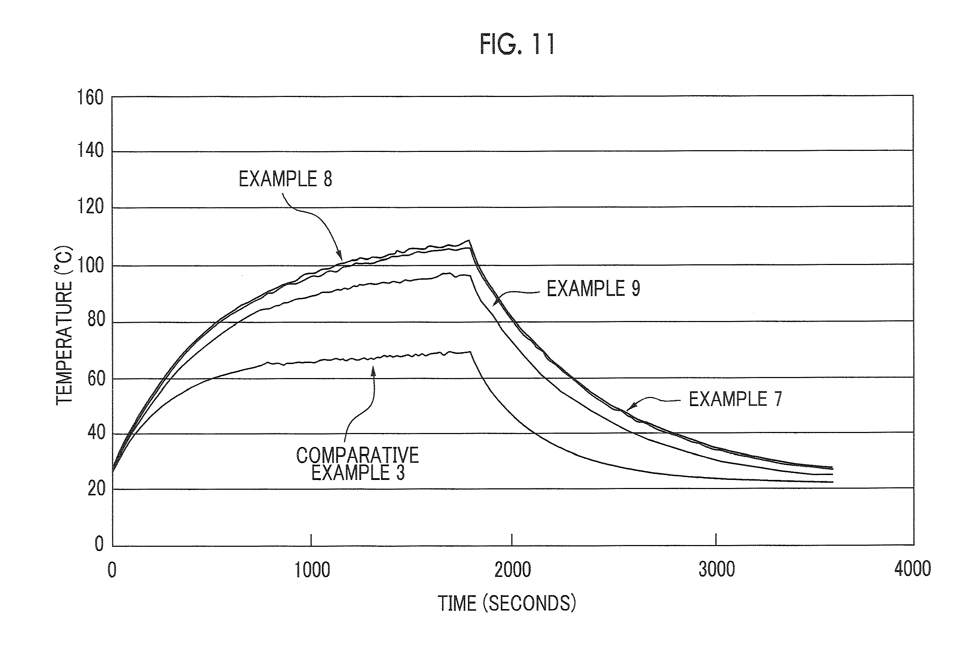

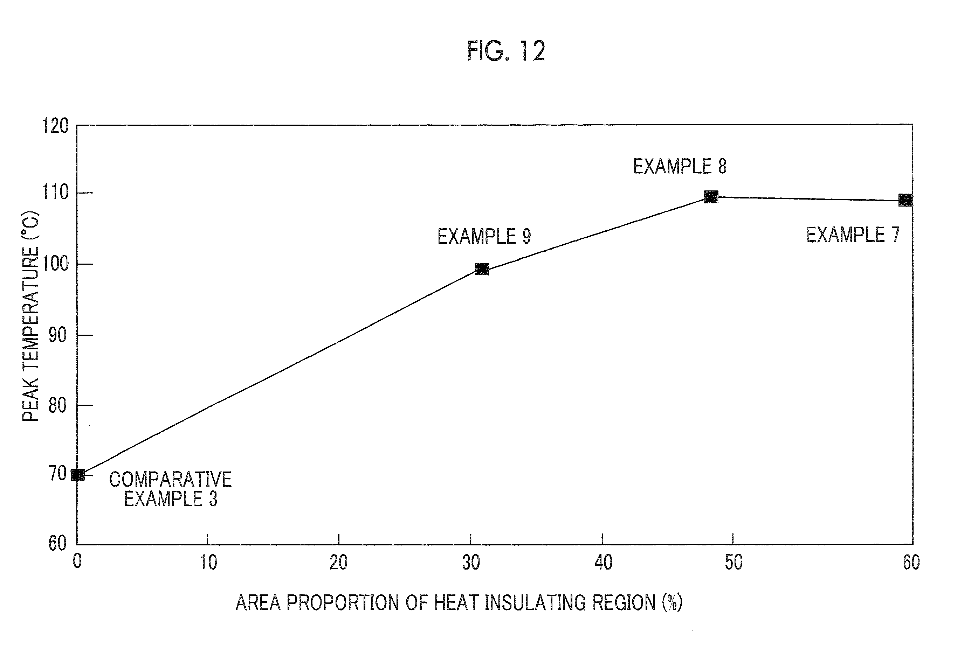

Fig. 7 illustrates graphs of the temperature changes of the samples in Examples 1 to 3 and Comparative example 1 of the invention, Fig. 9 illustrates graphs of the temperature changes of the samples in Examples 4 to 6 and Comparative example 2 of the invention, and Fig. 11 illustrates graphs of the temperature changes of the samples in Examples 7 to 9 and Comparative example 3 of the invention. In the respective graphs in Figs. 7, 9 and 11, the vertical axis indicates the temperature (°C), and the transverse axis indicates the elapsed time (seconds). In addition, Fig. 8 is a graph illustrating the relationship between the area proportions of the heat insulating regions and the peak temperatures of the samples in Examples 1 to 3 and Comparative example 1 of the invention, Fig. 10 is a graph illustrating the relationship between the area proportions of the heat insulating regions and the peak temperatures of the samples in Examples 4 to 6 and Comparative example 2 of the invention, and Fig. 12 is a graph illustrating the relationship between the area proportions of the heat insulating regions and the peak temperatures of the samples in Examples 7 to 9 and Comparative example 3 of the invention. In the respective graphs in Figs. 8, 10 and 12, the vertical axis indicates the peak temperature (°C), and the transverse axis indicates the area proportion of the heat insulating region (%). Furthermore, the temperature measurement results of the respective examples and the respective comparative examples are described in Table 1. Table 1 describes the peak temperatures and temperatures 30 minutes after the end of the irradiation of the lamp of the samples according to the respective examples and the respective comparative examples.

[Table 1]

| | Number of honeycomb units | Thickness of holding material (mm) | Area proportion of heat insulating region (%) | Peak temperature (°C) | Temperature after 30 minutes (°C) |
|---|---|---|---|---|---|
| Example 1 | 16 | 21 | 41.4 | 128.8 | 37.5 |
| Example 2 | 16 | 14 | 31.0 | 126.4 | 39.3 |
| Example 3 | 16 | 7 | 17.7 | 118.0 | 34.4 |
| Comparative example 1 | 16 | 0 | 0 | 99.8 | 31.1 |
| Example 4 | 9 | 21 | 49.6 | 107.0 | 30.2 |
| Example 5 | 9 | 14 | 38.2 | 106.5 | 30.0 |
| Example 6 | 9 | 7 | 22.5 | 99.8 | 29.0 |
| Comparative example 2 | 9 | 0 | 0 | 76.0 | 22.2 |
| Example 7 | 4 | 21 | 61.5 | 107.1 | 27.5 |
| Example 8 | 4 | 14 | 49.6 | 108.8 | 27.0 |
| Example 9 | 4 | 7 | 31.0 | 97.1 | 24.0 |
| Comparative example 3 | 4 | 0 | 0 | 70.0 | 21.5 |

As is evident from the results described in Figs. 7 to 12 and Table 1, it is found that, since the holding material 17 was wound around the peripheries in the samples according to Examples 1 to 9, compared to the samples, in which the holding material 17 is not formed on the peripheries, as in Comparative examples 1 to 3, heat is not easily scattered, and the temperature is easily increased. In addition, it is found that, as the area proportion of the heat insulating region increases and the thickness of the holding material 17 increases, the heat insulating property improves; however, when the area proportion of the heat insulating region exceeds 50%, the heat insulating performance becomes substantially constant, and barely changes. Since the area of the heat absorption body 11 is preferably as wide as possible, when the relationship between the thickness and the heat insulating efficiency is taken into account, the area proportion of the heat insulating region is considered to be preferably 50% or less.

(Second embodiment)

Hereinafter, a second embodiment, which is an embodiment of the thermal receiver of the invention, will be described with reference to the accompanying drawings.

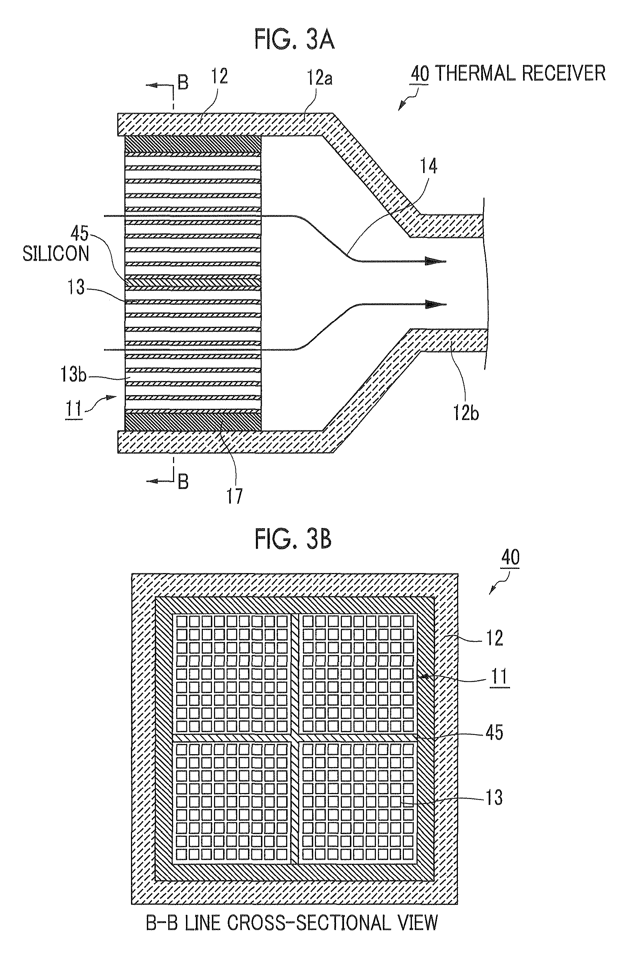

Fig. 3A is a vertical cross-sectional view schematically illustrating a thermal receiver according to the second embodiment of the invention, and Fig. 3B is a cross-sectional view of the thermal receiver cut along the line B-B illustrated in Fig. 3A.

As illustrated in Figs. 3A and 3B, a thermal receiver 40 according to the second embodiment of the invention is configured to include the heat absorption body 11, to which multiple honeycomb units 13 having multiple flow paths 13b arranged in parallel for the circulation of the heat medium 14 are adhered through an adhesive layer formed of silicon 45 that functions as adhesive paste, and the support body 12 which accommodates and supports the heat absorption body 11 and allows the circulation of the heat medium 14. In addition, the holding material 17 made of an inorganic fiber is interposed between the heat absorption body 11 and the support body 12, and the heat absorption body 11 is supported and fixed by the support body 12 through the holding material 17.

The honeycomb unit 13 is made of porous silicon carbide having open pores and the silicon 45 that fills up the open pores in the porous silicon carbide.

In the thermal receiver 40 according to the embodiment of the invention, the porosity of the honeycomb unit 13 is desirably 35% to 60%. When the porosity of the honeycomb unit 13 is less than 35%, some pores in the porous silicon carbide that configures the honeycomb unit 13 become closed pores, and it becomes difficult to fill the entire pores in the honeycomb unit 13 with the silicon 15. On the other hand, when the porosity of the honeycomb unit 13 exceeds 60%, the strength of the honeycomb unit 13 decreases, and the honeycomb unit becomes liable to be broken due to the repetition of the increase and decrease in the temperature of the honeycomb unit 13 (thermal history).

The average pore diameter of the porous silicon carbide is desirably 5 $\mu$m to 30 $\mu$m. When the average pore diameter of the porous silicon carbide is less than 5 $\mu$m, the pores in the porous silicon carbide are liable to become closed pores, and it becomes difficult to fill the silicon. On the other hand, when the average pore diameter of the porous silicon carbide exceeds 30 $\mu$m, the mechanical strength of the porous silicon carbide that configures the honeycomb unit 13 decreases.

The silicon filling up the open pores in the porous silicon carbide that configures the honeycomb unit 13 is preferably impregnated in 15 parts by weight to 50 parts by weight with respect to 100 parts by weight of the porous silicon carbide. When the silicon is impregnated in the porous silicon carbide in the above range, the open pores in the porous silicon carbide are filled with the silicon, and the honeycomb unit becomes a dense body.

Similarly to in the first embodiment, the number of the flow paths 13b per square centimeter in the honeycomb unit 13 according to the second embodiment of the invention is desirably 31.0 paths/cm$^2$ to 93.0 paths/cm$^2$.
In addition, the thickness of the wall portion between the flow paths is also preferably 0.1 mm to 0.5 mm, similarly to in the case of the first embodiment.

In the honeycomb unit 13 according to the embodiment of the invention, the porous silicon carbide is used as a porous ceramic for filling silicon, but it is also possible to use a different porous ceramic. Examples of the different porous ceramic include nitride ceramics, such as aluminum nitride, silicon nitride and boron nitride; and carbide ceramics, such as silicon carbide, zirconium carbide and tantalum carbide. The above ceramics have a high thermal conductivity.

In a case in which the heat absorption body 11 is manufactured using multiple honeycomb units 13, it is possible to produce the heat absorption body 11 by adhering the honeycomb units 13 using the silicon 45, which is the same material as the silicon filling up the inside of the porous silicon carbide that configures the honeycomb unit 13, as an adhesive.

The support body 12 is configured in the same manner as in the case of the first embodiment.
In the thermal receiver 40 according to the embodiment of the invention, the holding material 17 is interposed between the heat absorption body 11 and the support body 12, but the holding material 17 is also configured in the same manner as in the case of the first embodiment.

Hereinafter, a method for manufacturing the thermal receiver according to the second embodiment of the invention will be described.
First, the porous silicon carbide that configures the honeycomb unit is manufactured. The porous silicon carbide can be manufactured in the same manner as in the case of the first embodiment.

Subsequently, a metal impregnation process, in which a metal is impregnated into the fired compact of the honeycomb unit, is carried out. In a case in which silicon is impregnated into the fired compact of the honeycomb unit, for example, a carbon material is preferably impregnated into the fired compact of the honeycomb unit in advance. Examples of the carbon material include a variety of organic substances, such as furfural resins, phenol resins, lignin sulfonate, polyvinyl alcohols, cornstarch, molasses, coal tar pitch and alginate. Meanwhile, a pyrolytic carbon, such as carbon black or acetylene black, can be also used in the same manner.

The reason for impregnating the carbon substance into the fired compact of the honeycomb unit in advance is that, since a new silicon carbide film is formed on the surfaces of the open pores in the fired compact of the honeycomb unit, the bond between the fused silicon and the fired compact of the honeycomb unit becomes strong. In addition, the reason is that the strength of the fired compact of the honeycomb unit also becomes strong through the impregnation of the honeycomb unit into the fired compact.

In addition, examples of a method for filling the silicon into the open pores in the fired compact of the honeycomb unit include a method in which the silicon is heated and fused so as to be absorbed and fill up the open pores in the fired compact of the honeycomb unit. In this case, silicon having a lump, powder or particle form is placed on the top surface or bottom surface (side surfaces excluding the end surfaces) of the fired compact of the honeycomb unit, the silicon is melted at 1450°C or more under a vacuum condition, and the silicon fills up the open pores in the fired compact of the honeycomb unit. The impregnation rate of the silicon in the fired compact of the honeycomb unit can be controlled by changing the orientation of the honeycomb unit, on which the silicon is placed, and repeating the above operation, and/or changing the weight of the silicon being placed.

It is also possible to apply a method in which finely powdered silicon is dispersed in a liquid of a dispersion medium, the liquid of a dispersion medium is impregnated in the fired compact of the honeycomb unit, dried, and then heated to the fusion temperature or more of the silicon.

In addition, the metal impregnation process on the fired compact of the honeycomb unit may be carried out on the compact of the honeycomb unit (that is, the honeycomb unit before the firing process). When the above method is used, it is possible to achieve power saving, and to suppress the manufacturing costs.

The above method enables the obtainment of a fired compact of the honeycomb unit filled with the silicon. Meanwhile, the fired compact of the honeycomb unit filled with the silicon is called a honeycomb unit. The honeycomb unit can be used as the heat absorption body as it is; however, when multiple honeycomb units are adhered to each other using the adhesive paste so as to be used as the heat absorption body, the following method can be used.

That is, when the silicon is used as the adhesive paste, and multiple honeycomb units are adhered to each other through a silicon layer, the silicon fills up and is adhered to the porous silicon carbide (honeycomb unit) at the same time. In this case, it is possible to use, for example, a method in which multiple fired compacts of the honeycomb units, in which fine powder-form silicon has been impregnated, are assembled into a shape of the heat absorption body using predetermined fixing devices and the like, and then heated.

In a case in which the fired compacts of the honeycomb units, in which silicon fine powder has not been impregnated, are used, it is possible to use a method in which multiple fired compacts are assembled, then, silicon is placed on the top surface, bottom surface and the like (side surfaces excluding end surfaces) of the fired compacts of the honeycomb units in the vacuum, and heated. The fired compact body of the honeycomb units may be adhered to each other by coating a slurry form of silicon powder on the side surfaces of the fired compacts of the honeycomb units, and heating the fired compacts in a state in which two fired compacts of the honeycomb units are in contact with each other through the coated surface. Multiple honeycomb units can be joined by carrying out the above operation repeatedly.

Even in a case in which any of the above methods is used, the silicon fills up the open pores in the honeycomb unit (porous silicon carbide), and the silicon spreads into the space between the side surfaces of the honeycomb units so as to form the adhesive layer, whereby the fired compacts of the honeycomb units can be adhered to each other through the silicon. The support body can also be manufactured in the same manner as in the case of the first embodiment.

When assembling the thermal receiver 40, the holding material 17 is wound around the heat absorption body 11 manufactured using the above method, is pushed into and fixed by the support body 12, whereby the thermal receiver 40 can be assembled.

Hereinafter, the actions and effects of the thermal receiver of the embodiment will be listed.

The embodiment does not only exhibit the actions and effects of (2) and (4) of the first embodiment, but also exhibits the following effect.

(5) In the thermal receiver of the embodiment, since the honeycomb unit is configured by including the porous silicon carbide and the silicon that fills up the open pores in the porous silicon carbide, the honeycomb unit becomes a dense body. In addition, since the honeycomb unit is a dense body, the thermal capacity of the honeycomb unit becomes large, and the heat-storing property of the heat absorption body increases. In addition, since the thermal conductivity of the honeycomb unit increases, the obtained heat can be smoothly transferred to the heat medium, such as the air.

(Third embodiment)

Hereinafter, a third embodiment, which is an embodiment of the thermal receiver of the invention, will be described.

The thermal receiver according to the present embodiment is configured in the same manner as in the thermal receiver according to the first embodiment except that the heat absorption body is supported by fixing members provided in the support body, and an air layer is present between the heat absorption body and the support body excluding the fixing members. Therefore, in the following description, a method for fixing the heat absorption body using the fixing members provided in the support body will be described.

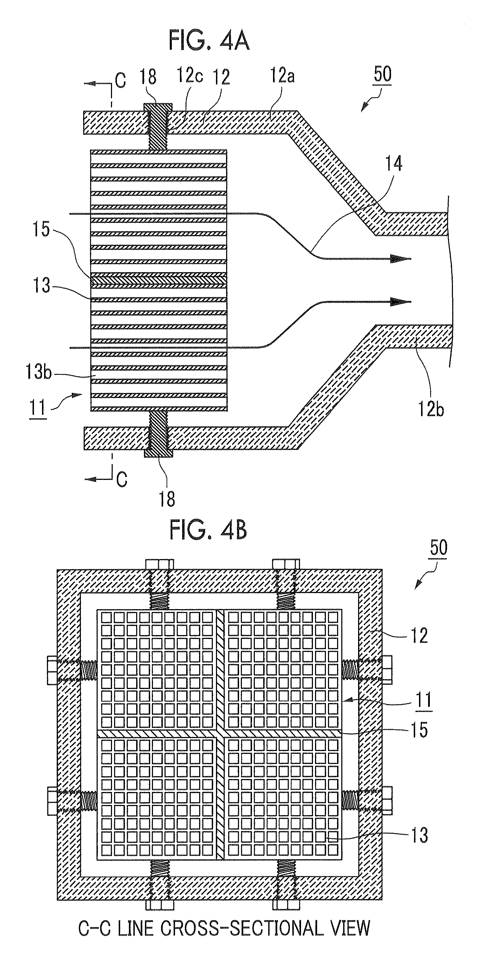

Fig. 4A is a cross-sectional view schematically illustrating the thermal receiver according to the third embodiment of the invention, and Fig. 4B is a cross-sectional view of the thermal receiver cut along the line C-C illustrated in Fig. 3A. As illustrated in Figs. 4A and 4B, in a thermal receiver 50 according to the third embodiment of the invention, the heat absorption body 11 accommodated in the support body 12 is supported and fixed by bolts 18, which are fixing members.

That is, multiple screw holes 12c for screwing the bolts 18, which are substantially columnar fixing members, are formed in the support body 12. In addition, multiple bolts 18 are screwed into the screw holes 12c, and the heat absorption body 11 is fixed using the multiple bolts 18.

Although not shown, an elastic fixing auxiliary member having a predetermined thickness may be interposed between the bolts 18 and the heat absorption body 11. The fixing auxiliary member can be manufactured using, for example, the inorganic fiber, the inorganic binder and the like. The heat absorption body 11 can be firmly supported and fixed by the support body 12 using the elastic fixing auxiliary member.

In the embodiment, the bolts 18 are used as the fixing members, but the fixing members are not limited to the bolts, and any members can be used as long as screw holes can be opened, and screws can be screwed in. In addition, the material is preferably a thermal resistant metal material or ceramic. Examples of the thermal resistant metal material include iron, nickel, chromium, aluminum, tungsten, molybdenum, titanium, lead, copper, zinc, alloys of the above metals, and the like. In addition, examples of the ceramic include nitride ceramics, such as aluminum nitride, silicon nitride, boron nitride and titanium nitride; carbide ceramics, such as zirconium carbide, titanium carbide, tantalum carbide and tungsten carbide; oxide ceramics, such as silica, alumina, mullite and zirconia; and the like.

In the embodiment, the heat absorption body 11 is fixed using multiple bolts 18, the air layer is present in portions other than the portion fixed by the bolts 18, and, when the heat medium 14 is suctioned, the air layer portion between the heat absorption body 11 and the support body 12 is also suctioned, thereby generating the flow of a predetermined flow amount of the heat medium 14. Therefore, the layer of the flowing heat medium 14 functions as the heat insulating layer (heat-retention layer), and it is possible to effectively prevent heat from scattering from the heat absorption body 11 to the support body 12.

However, when the gap between the heat absorption body 11 and the support body 12 is too wide, since the heat medium 11 can easily pass through the space between the heat absorption body 11 and the support body 12, it becomes difficult for the heat medium to pass through the flow paths 13b formed in the honeycomb unit 13, and the transferring efficiency of heat to the heat medium 11 decreases. Therefore, the gap between the heat absorption body 11 and the support body is desirably set to a predetermined gap with which a heat insulating effect is generated. Therefore, the area proportion of the heat insulating region is preferably 5% to 50%.

Hereinafter, the actions and effects of the thermal receiver of the embodiment will be listed. The embodiment does not only exhibit the actions and effects of (1), (3) and (4) of the first embodiment, but also exhibits the following effect.

(6) In the thermal receiver of the embodiment, the air layer is present between the heat absorption body and the support body, and, when the heat medium is suctioned, the air layer portion between the heat absorption body and the support body is also suctioned, thereby generating the flow of a predetermined flow amount of the heat medium. Therefore, the layer of the flowing heat medium functions as a heat-retention layer (heat insulating layer), and it is possible to effectively prevent heat from scattering from the heat absorption body to the support body.

(Fourth embodiment)

Hereinafter, a fourth embodiment, which is an embodiment of the solar thermal power generation device of the invention, will be described. In the solar thermal power generation device according to the embodiment, the thermal receiver according to the first embodiment of the invention is used.

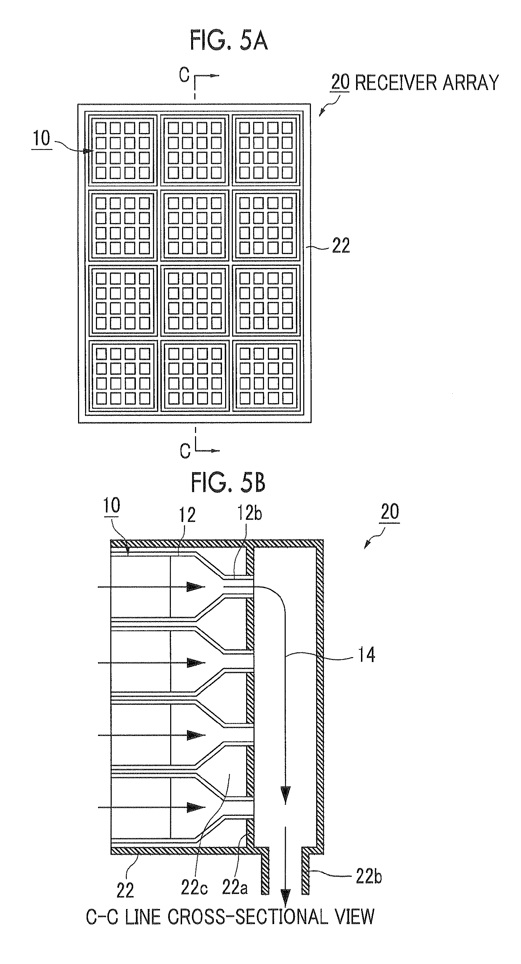

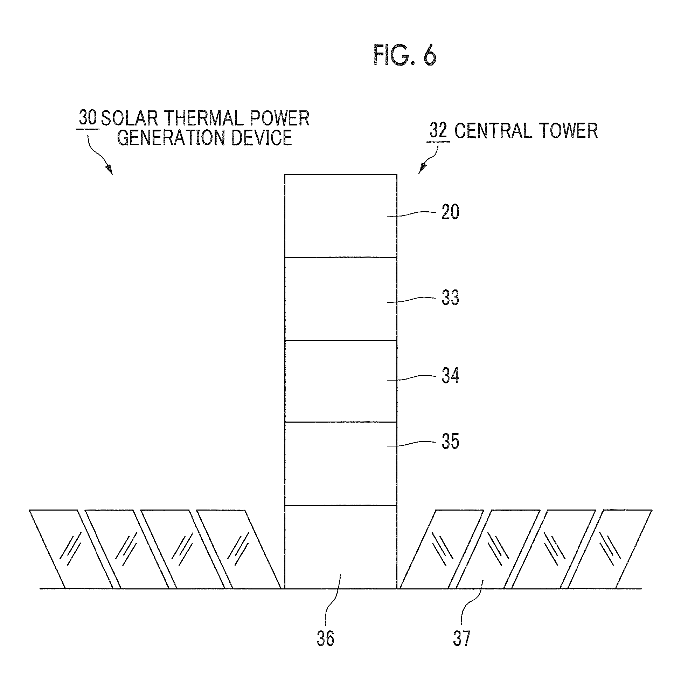

Fig. 5A is a front view schematically illustrating a receiver array that configures the solar thermal power generation device according to the invention, and Fig. 5B is a cross-sectional view of the receiver array cut along the line C-C illustrated in Fig. 5A. Fig. 6 is an explanatory view schematically illustrating the solar thermal power generation apparatus according to the invention.

In a receiver array 20 illustrated in Figs. 5A and 5B, multiple thermal receivers 10 are disposed in a boxlike frame 22, in which a solar light irradiation surface is opened, in a state in which the surfaces of the heat absorption bodies 11 which receive the radiation of solar light are arrayed to face the front. In the present specification, an assembly of multiple arrayed thermal receivers will also be referred to as a receiver array.

That is, gas exits 12b for the support body 12 that configure the thermal receiver 10 are coupled with a bottom portion 22a of the frame 22, and the bottom portion 22a forms a closed space except a portion that is connected to a pipe 22b. Therefore, the heat medium 14, such as the air, passes through the flow paths 13b formed in the honeycomb unit 13, is heated using the heat absorption body 11, and then collected in a space formed in the bottom portion 22a of the frame 22 through the exits 12b for the heat medium in the support body 12. After that, the heat medium 14 is led to a vapor generating device 33, described below, through the pipe 22b.

In actual cases, the pipe 22b, a container coupled with the pipe 22b, or the like is coupled with an apparatus that suctions gas, such as an efflux pump. Therefore, when the efflux pump or the like is driven, the heat medium 14, such as the air, around the thermal receiver 10 passes through the flow paths 13b formed in the honeycomb unit 13, and heat stored in the heat absorption body 11 is transferred to the heat medium, such as the air.

In Figs. 5A and 5B, the air around the thermal receiver 10 is led to the flow paths 13b in the honeycomb unit 13, the solar thermal power generation device may have a dual structure having two rooms as the bottom portion 22a of the frame 22. In this case, suddenly, the heat medium 14, such as the air, does not flow into the flow paths 13b formed in the honeycomb unit 13, but flows into one of the two rooms, thereby flowing into spaces 22c present between the multiple thermal receivers 10. After that, the heat medium 14 is blown out from the void formed in the enlarged portion 12a, and immediately flows into the flow paths 13b formed in the honeycomb unit 13 of the thermal receiver 10.

In this case, since the heat medium 14 exchanges heat with the support body 12 having an increased temperature for the first time, the thermal efficiency becomes large.

As illustrated in Fig. 6, in the solar thermal power generation device 30 of the invention, the receiver array 20 is disposed at the height location of a central tower 32, and the vapor generation device 33, a heat storing device 34, a vapor turbine 35 and a cooling device 36 are sequentially disposed below the receiver array. In addition, multiple heliostats 37 are disposed around the central tower 32, the heliostats 37 are set so that the reflection angle or the rotating direction using the vertical direction as the axis can be freely controlled, whereby the solar thermal power generation device is automatically controlled so that momentarily changing solar light is reflected at the heliostats 37 and collected at the receiver array 20 in the central tower 32.

The vapor generating device 33 is a division that generates vapor for driving the vapor turbine 35. In the vapor generating device 33, the heat medium 14 heated using the heat absorption body 11 in the receiver array 20 passes through the pipe 22b, then, is led to the pipe in the vapor generating device 33 (broiler), and the heat exchange with the heat medium 14 occurs. Water heated through the heat exchange generates water vapor.

The generated water vapor is introduced into the vapor turbine 35, drives and rotates the vapor turbine 35, and a power generator is driven through the rotation of the vapor turbine 35, thereby generating electricity.

The heat storing device 34 is a portion that temporarily stores the heat obtained using the heat medium 14, and sand is used as a heat storing member. In the heat storing device 34, a heat storing pipe (not shown) connected to the pipe 22b is made to pass through the sand, and the heat medium 14 heated using the heat absorption body 11 is made to pass through the heat storing pipe, thereby supplying heat to the sand, which is a heat storing material. Since the heat storing material has a large thermal capacity, the material can absorb and store a large amount of heat. Meanwhile, the heat storing material accommodated in the heat storing device 34 is not limited to the sand, and may be another inorganic material having a large thermal capacity, and may be a variety of salts and the like.

Another vapor generating pipe (not shown), separately from the heat storing pipe, is made to pass through the sand in the heat storing device 34, a non-heated heat medium is made to flow through the vapor generating pipe at times during which solar light cannot be used, such as at night, and the heat medium is heated using the sand of the heat storing material having an increased temperature. The heat storing pipe may function as the vapor generating pipe.

The heated heat medium flows into the vapor generating device 33 so as to generate water vapor, and, as described above, electricity is generated through the driving of the vapor turbine 35.

The water vapor that has passed through the vapor turbine 35 is led to the cooling device 36, is cooled in the cooling device 36 so as to turn into water, undergoes a predetermined treatment, and then returns to the vapor generating device 33.

The cooling device 36 is preferably configured so that the heat medium 14, which has been made to pass through the vapor generating device 33 so as to be cooled, passes through a cooling pipe (not shown) in the cooling device 36. Since the heat medium 14 is made to pass through the cooling pipe so as to be heated, it is possible to efficiently use the heat absorbed at the thermal receiver 10.

In addition, as described above, when the pipe is configured so that the heat medium 14 that has collected heat flows into spaces 22c formed between the multiple thermal receivers 10 in the receiver array 20, furthermore, it is also possible to effectively use the heat of the support body 12 in the thermal receiver 10.

Hereinafter, the actions and effects of the solar thermal power generation device of the fourth embodiment of the invention will be listed.

(1) In the solar thermal power generation device of the embodiment, since the thermal receiver according to the first embodiment is used, it is possible to efficiently convert the radiated solar light into heat, and to efficiently generate power.

(2) In the solar thermal power generation device of the embodiment, since the receiver array has multiple thermal receivers, it is possible to use a large amount of solar heat, and to carry out a large amount of power generation.

(3) In the solar thermal power generation device of the embodiment, since the heat storing device is used, and heat generated using solar light can be stored in the heat storing device, it is possible to generate power even at night or rainy days, during which there is no solar light.

(Other embodiments of the invention)

Hereinafter, other embodiments of the thermal receiver of the invention will be described.

The honeycomb unit 13 (heat absorption body 11) is configured of the porous silicon carbide having open pores in the first embodiment of the invention, and is configured of the porous silicon carbide having open pores and the silicon 15 that fills up the open pores in the porous silicon carbide in the second embodiment. However, the thermal receiver of the invention is not limited to the above configurations, and, for example, the honeycomb unit 13 may be configured of dense silicon carbide having a small porosity.

In a case in which the honeycomb unit 13 is configured of dense silicon carbide, since the thermal capacity of the honeycomb unit 13 becomes large, the heat storing performance is excellent. In addition, as described above, since silicon carbide is stable in the air even at 1600°C, and is extremely excellent in terms of thermal resistance, the performances do not change even in long-term use. In addition, since silicon carbide has a high thermal conductivity, it is possible to transfer the heat stored in the honeycomb unit 13 to the heat medium.

In a case in which the honeycomb unit 13 is configured of dense silicon carbide, the porosity is preferably 5% or less.

In the honeycomb unit 13 (heat absorption body 11) configured of dense silicon carbide, regarding the flow paths in the honeycomb unit 13, when a vertical cross-section is formed with respect to the flow paths, similarly to the case of the first embodiment, the number of the flow paths per square meter is desirably 31.0 paths/cm$^2$ to 93.0 paths/cm$^2$.

Regarding the thickness of the wall portion in the honeycomb unit 13, similarly to the case of the first embodiment, the thickness of the wall portion between the flow paths is preferably 0.1 mm to 0.5 mm.

In a case in which the heat absorption body 11 is manufactured using multiple honeycomb units made of dense silicon carbide, the heat absorption body can be manufactured by adhering the honeycomb units using the adhesive paste including at least one of the inorganic particles, the inorganic fiber and the inorganic binder, which are described in the first embodiment, or by adhering the honeycomb units using silicon which is described in the second embodiment.

In addition, in the thermal receiver according to other embodiments of the invention, an inorganic heat insulating member may be interposed between the heat absorption body and the support body.

Examples of the inorganic heat insulating member include the member obtained using the adhesive paste used as an adhesive that adheres and binds multiple honeycomb units in the second embodiment. That is, in this case, the adhesive paste is coated around the heat absorption body formed by joining multiple honeycomb units, and the heat absorption body is adhered to the support body through the coated layer.

The adhesive paste includes at least one of the inorganic particles, the inorganic fiber and the inorganic binder, and may include an organic binder. Since the adhesive paste has been described in the second embodiment, the adhesive paste will not be described in detail herein.

In the embodiment, the thermal receiver made of multiple honeycomb units has been described, but the thermal receiver of the invention may be configured of one honeycomb unit

When used in the solar thermal power generation device 30, since the heat absorption body 11 reaches approximately 1000°C, moisture and the like in the adhesive layer are volatilized, and an inorganic heat insulating member, in which the inorganic particles and the inorganic fiber are coupled using the solid content of the inorganic binder, is formed. Meanwhile, in a case in which the adhesive layer includes an organic binder, it is needless to say that the organic binder is decomposed and eliminated.

Reference Signs List

10, 40, 50 THERMAL RECEIVER

11 HEAT ABSORPTION BODY

12 SUPPORT BODY

12a ENLARGED PORTION

12b EXIT OF HEAT MEDIUM

13 HONEYCOMB UNIT

13b FLOW PATH

14 HEAT MEDIUM

15 SEAL MATERIAL LAYER

17 HOLIDNG MATERIAL

18 BOLT

20 RECEIVER ARRAY

22 FRAME

22a BOTTOM PORTION

22b PIPE

22c SPACE

30 SOLAR THERMAL POWER GENERATION DEVICE

32 CENTRAL TOWER

33 VAPOR GENERATING DEVICE

34 HEAT STORING DEVICE

35 VAPOR TURBINE

36 COOLING DEVICE

37 HELIOSTAT

45 SILICON

**Claims**

1.  A thermal receiver used in a solar thermal power generation device, comprising:

    a heat absorption body made of one or a plurality of honeycomb units having a plurality of flow paths arranged for circulation of a heat medium; and
    a support body which supports the heat absorption body and allows circulation of the heat medium,
    wherein the heat absorption body is configured to include silicon carbide, and is supported a predetermined distance away from an inner surface of the support body.

2.  The thermal receiver according to Claim 1,
    wherein a holding material including an inorganic fiber is interposed between the heat absorption body and the support body.

**3.** The thermal receiver according to Claim 1,
wherein the heat absorption body is supported by fixing members provided in the support body, and an air layer is present between the heat absorption body and the support body excluding the fixing members.

**4.** The thermal receiver according to Claim 1,
wherein an inorganic heat insulating member is interposed between the heat absorption body and the support body.

**5.** The thermal receiver according to Claim 2,
wherein the holding material is made of an alumina-silica fiber, an alumina fiber or a silica fiber.

**6.** The thermal receiver according to Claim 5,
wherein a composition ratio between alumina and silica (alumina/silica) is 60/40 to 80/20.

**7.** The thermal receiver according to any one of Claims 1 to 6,
wherein, when a cross-sectional area of a surface parallel to a surface of the heat absorption body, to which solar light is radiated, is indicated by A, and an opening area of the support body including the surface parallel to the surface to which solar light is radiated is indicated by B,
an area proportion of the heat insulating region, which is represented by the following formula (1), is 5% to 50%,

$$\text{Area proportion of a heat insulating region (\%)} = (B - A) \times 100 / B \quad \cdots \quad (1).$$

**8.** The thermal receiver according to any one of Claims 1 to 7,
wherein the heat absorption body is made of porous silicon carbide.

**9.** The thermal receiver according to any one of Claims 1 to 7,
wherein the heat absorption body includes porous silicon carbide and silicon that fills up pores in the porous silicon carbide.

**10.** The thermal receiver according to Claim 8 or 9,
wherein porosity of the porous silicon carbide is 35% to 60%, and an average pore diameter is 5 $\mu$m to 30 $\mu$m.

**11.** The thermal receiver according to any one of Claims 1 to 7,
wherein the heat absorption body is made of dense silica carbide.

**12.** The thermal receiver according to any one of Claims 1 to 11,
wherein flow paths are formed in the heat absorption body at 31.0 paths/cm$^2$ to 93.0 paths/cm$^2$, and a thickness of a wall portion between the flow paths in the heat absorption body is 0.1 mm to 0.5 mm.

**13.** A solar thermal power generation device,
wherein the thermal receiver according to any one of Claim s 1 to 12 is used.

## FIG. 1A

A — 12 SUPPORT BODY — 12a — 10 THERMAL RECEIVER

14 HEAT MEDIUM

15
SEAL MATERIAL LAYER

13
HONEYCOMB UNIT

13b FLOW PATH

11
HEAT ABSORPTION BODY

12b

A

17 HOLDING MATERIAL

## FIG. 1B

17

10

12

11

15

13

A-A LINE CROSS-SECTIONAL VIEW

FIG. 2

CROSS-SECTIONAL AREA OF
HEAT INSULATING REGION

## FIG. 3A

40 THERMAL RECEIVER

## FIG. 3B

B-B LINE CROSS-SECTIONAL VIEW

## FIG. 4A

## FIG. 4B

C-C LINE CROSS-SECTIONAL VIEW

## FIG. 5A

C →

20 RECEIVER ARRAY

10

22

C →

## FIG. 5B

10    12    12b    20

14

22    22c    22a    22b

C–C LINE CROSS–SECTIONAL VIEW

# FIG. 6

30 SOLAR THERMAL POWER GENERATION DEVICE

32 CENTRAL TOWER

20

33

34

35

36

37

FIG. 7

EP 2 634 503 A1

FIG. 8

FIG. 9

EP 2 634 503 A1

FIG. 10

FIG. 11

EP 2 634 503 A1

FIG. 12

EP 2 634 503 A1

**INTERNATIONAL SEARCH REPORT**

International application No.

PCT/JP2011/074520

A. CLASSIFICATION OF SUBJECT MATTER
*F24J2/04*(2006.01)i, *F03G6/00*(2006.01)i, *F24J2/24*(2006.01)i, *F24J2/46*
(2006.01)i, *F24J2/48*(2006.01)i

According to International Patent Classification (IPC) or to both national classification and IPC

B. FIELDS SEARCHED

Minimum documentation searched (classification system followed by classification symbols)
F24J2/02-2/04, F24J2/24, F24J2/46-F24J2/48, F03G6/00

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | US 4263895 A  (Angelo A.Colao),<br>28 April 1981 (28.04.1981),<br>column 3, lines 9 to 13, 37 to 38; fig. 1 to 2<br>(Family: none) | 1-6,8-13<br>7 |
| Y | JP 2003-329311 A  (Takeo SAITO),<br>19 November 2003 (19.11.2003),<br>paragraphs [0016] to [0017]; fig. 4, 5<br>(Family: none) | 1-6,8-13 |
| Y | JP 58-169102 A  (Director General, Agency of<br>Industrial Science and Technology),<br>05 October 1983 (05.10.1983),<br>page 2, upper right column, line 17 to lower<br>left column, line 18; fig. 1 to 2<br>(Family: none) | 2,5,6,8-13 |

[X] Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>12 December, 2011 (12.12.11) | Date of mailing of the international search report<br>27 December, 2011 (27.12.11) |
|---|---|
| Name and mailing address of the ISA/<br>Japanese Patent Office | Authorized officer |
| Facsimile No. | Telephone No. |

Form PCT/ISA/210 (second sheet) (July 2009)

33

**INTERNATIONAL SEARCH REPORT**

International application No.

PCT/JP2011/074520

C (Continuation). DOCUMENTS CONSIDERED TO BE RELEVANT

| Category* | Citation of document, with indication, where appropriate, of the relevant passages | Relevant to claim No. |
|---|---|---|
| Y | JP 08-165120 A (Olympus Optical Co., Ltd.), 25 June 1996 (25.06.1996), paragraphs [0011] to [0012] (Family: none) | 5,6,8-13 |
| Y | JP 02-097895 A (Director General, Agency of Industrial Science and Technology), 10 April 1990 (10.04.1990), claims & US 4993481 A & GB 2224112 A & DE 3932988 A | 8-13 |
| Y | JP 2001-158680 A (Ibiden Co., Ltd.), 12 June 2001 (12.06.2001), paragraphs [0025] to [0026] & EP 1174400 A1 & WO 2001/040138 A1 | 9,11-13 |
| Y | JP 2005-298304 A (Nippon Steel Corp.), 27 October 2005 (27.10.2005), paragraphs [0005] to [0009] (Family: none) | 11-13 |
| A | US 4121564 A (Jacob Schwartz), 24 October 1978 (24.10.1978), entire text; all drawings (Family: none) | 1-13 |
| A | US 5483950 A (Guenter Keintzel), 16 January 1996 (16.01.1996), entire text; all drawings & EP 604644 A & WO 1994/002788 A1 & DE 4223779 C & DE 59303871 C & DE 4223779 C1 & AU 663804 B & ES 2093447 T & AU 4700193 A | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6003508 A